(19) Europäisches Patentamt
European Patent Office
Office européen des brevets

(11) **EP 1 998 289 A1**

(12) **EUROPEAN PATENT APPLICATION**
published in accordance with Art. 158(3) EPC

(43) Date of publication:
**03.12.2008 Bulletin 2008/49**

(51) Int Cl.:
*G06T 11/80* (2006.01)    *G06T 1/00* (2006.01)

(21) Application number: **06729552.7**

(22) Date of filing: **20.03.2006**

(86) International application number:
**PCT/JP2006/305584**

(87) International publication number:
**WO 2007/108101 (27.09.2007 Gazette 2007/39)**

(84) Designated Contracting States:
**DE FI FR GB IT**

(71) Applicant: **Olympus Corporation Tokyo 151-0072 (JP)**

(72) Inventors:
- **AKATSUKA, Yuichiro,**
  **c/o Olympus Int. Prop. Srvices Co., Ltd.**
  **Hachioji-shi, Tokyo 192-8512 (JP)**
- **FURUHASHI, Yukihito,**
  **c/o Olympus Int. Prop. Services Co., Ltd.**
  **Hachioji-shi, Tokyo 192-8512 (JP)**

- **SHIBASAKI, Takao,**
  **c/o Olympus Intell. Prop. Services Co., Ltd.**
  **Hachioji-shi, Tokyo 192-8512 (JP)**
- **SAITO, Akito,**
  **c/o Olympus Intell. Prop. Services Co., Ltd.**
  **Hachioji-shi, Tokyo 192-8512 (JP)**

(74) Representative: **von Hellfeld, Axel**
  **Wuesthoff & Wuesthoff**
  **Patent- und Rechtsanwälte**
  **Schweigerstrasse 2**
  **81541 München (DE)**

(54) **INFORMATION TERMINAL DEVICE**

(57)    An information terminal comprises an image input unit (10) inputting images, a reference pattern detection unit (12) detecting a reference pattern in the images input from the input unit (10), an image identification unit (16) identifying an image within an area in a prescribed positional relationship to the reference pattern detected by the detection unit (12) out of images input by the input unit (10), and a processing unit (20) performing processing associated with the image identified by the identification unit (16).

FIG. 1

**Description**

Technical Field

The present invention relates to an information terminal which recognizes a marker.

Background Art

A related information presenting device which superposes and displays related information of each part of an object at a corresponding position on an image with the object photographed therein has been described in USP 6,577,249. In the presenting device, an image input means inputs the image with the object photographed therein by including a marker indicating a pattern showing position information of four or more points of the object within an imaging range. A position information management means reads the pattern from the input image to acquire the position information. A position information acquisition means acquires a position and an attitude of the input means from the position information. A related information generation means obtains positions of each part of the object on the screen in accordance with the position and the attitude of the input means. An information superposing and displaying means superposes and displays the related information at the corresponding position based on the obtained position on the image.

An image processing device which specifies a notable image from an image has been disclosed in Jpn. Pat. Appln. KOKAI Publication No. 2003-67742. In such an image processing device, a marker image specifying unit specifies a marker image capable of recognizing a specified direction in the notable image from the image. The specifying unit utilizes relative position information showing a positional relationship between the marker image and the notable image and a specified direction recognized from the marker image to specify the notable image.

In the information presenting device recognizing the marker, as disclosed in the foregoing USP 6,577,249, the marker is formed by integrating a reference pattern such as a rectangular frame and an image (pattern) as a texture for identification of a marker. In other words, the texture for identification performing pattern matching is included in the reference pattern. Therefore, a freedom degree of a design and an arrangement of the marker are small. There is a failure such that the case where a difference between the recognition possibility of the reference pattern and that of the texture for identification occurs sometimes.

The aforementioned Jpn. Pat. Appln. KOKAI Publication No. 2003-67742 has disclosed a technique extracting a notable part (black board) from a photograph by the use of markers arranged at four corners of the black board. However, the technique that has been disclosed in this patent document cannot detect a position and an attitude of an photographing device by markers and present information by using position and attitude information.

Disclosure of Invention

The present invention is made under the consideration of the aforementioned points, and an object of the invention is to provide an information terminal configured to recognize markers even if the markers are formed in a manner that a reference pattern and an image for identification the markers are separated from each other, and to increase a degree of freedom in a design and an arrangement of markers.

An aspect of the information terminal of the invention is characterized by comprising: an image input unit which inputs images; a reference pattern detection unit which detects a reference pattern in the images input from the image input unit; an identification unit which identifies an image in an area in a predetermined positional relationship to the reference pattern detected by the reference pattern detection unit out of the images input from the image input unit; and a processing unit which performs processing associated with the image identified by the identification means.

Brief Description of Drawings

FIG. 1 is a view showing a configuration of an information terminal regarding the first embodiment of the invention;
FIG. 2 is a view showing an example of a reference pattern;
FIG. 3 is a view showing another example of a reference pattern;
FIG. 4 is a view showing further example of a reference pattern;
FIG. 5 is a view showing a configuration of an information terminal regarding the second embodiment of the invention;
FIG. 6 is a view for explaining an example superposing and displaying a land mark which has existed out of a field of view in photographing as related information;
FIG. 7 is a view for explaining an example superposing and displaying a land mark which has existed out of a field of view in photographing as related information;

FIG. 8 is a view for explaining an example superposing and displaying a land mark which has existed out of a field of view in photographing as related information; and

FIG. 9 is a view for explaining an example of superposing and displaying a part to which trimming is applied after photographing as related information.

Best Mode for Carrying Out the Invention

Hereinafter, an optimum form to embody the invention will be described with reference to the drawings.

(First Embodiment)

The embodiment separates a marker into a reference pattern and a texture for identification, and separately creates and manages them. An information terminal firstly recognizes the reference pattern, and next, identifies the marker by the texture for identification positioned at a prescribed positional relationship to the reference pattern.

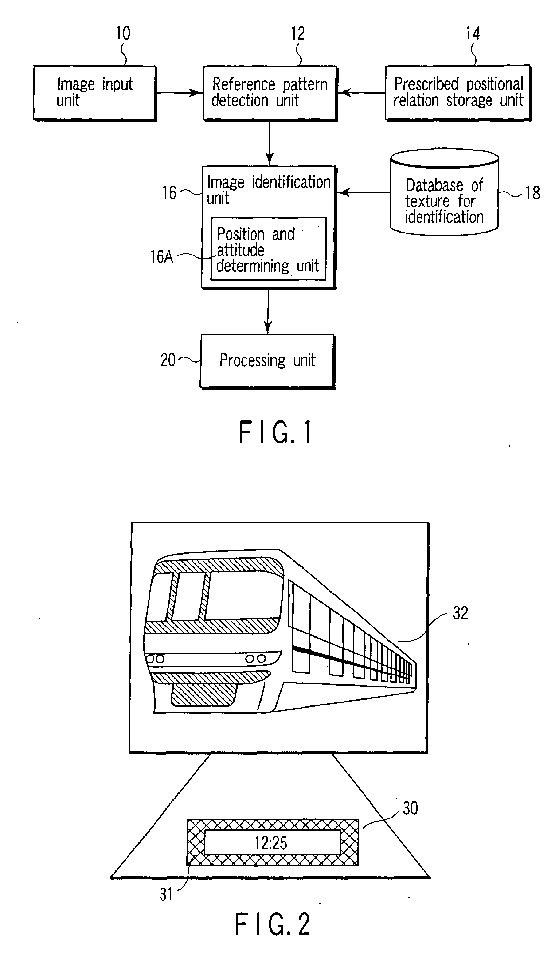

The information terminal regarding the first embodiment of the invention comprises, as shown in FIG. 1, an image input unit 10, a reference pattern detection unit 12, a prescribed positional relationship storage unit 14, an image identification unit 16, a database of texture for identification 18, and a processing unit 20.

The image input unit 10 is a camera that photographs and inputs an image. Or, the image input unit 10 may one which reads and inputs an image photographed by the camera from a storage device and a medium. Further, the image input unit 10 may be one that inputs such an image via a network. The reference pattern detection unit 12 detects a reference pattern in the image input from the image input unit 10. The prescribed positional relationship storage unit 14 stores a prescribed positional relationship with respect to the reference pattern. The reference pattern detection unit 12 extracts an image in an area of the texture for identification that is an area in the prescribed positional relationship to the detected reference pattern in the image input by the image input unit 10 out of the images input from the input unit 10 on the basis of the prescribed positional relationship stored in the prescribed positional relationship storage unit 14.

A plurality of items of texture data for identification are registered in the database of texture for identification 18. The image identifying unit 16 performs matching processing among each item of texture data for identification registered in the database of texture for identification 18 and a texture image for identification in the extracted texture area for identification. The image identification unit 16 identifies what the texture image for identification is by means of the matching processing. As for matching processing, there is a method for applying matching processing to a prescribed area of a texture image as pattern data, a method for applying matching processing by using a characteristic point group included in the texture image, etc. In this embodiment, both the methods are usable, and it is of course that the method with both the methods combined therein may be usable. The processing unit 20 conducts processing which is associated with the texture image for identification identified by the image identification unit 16. As to the associated processing, a variety of types of processing, for example, of acquiring information from a related Web site, of transmitting and receiving a related e-mail, of stating related application software, of transferring related information such as a URL to the application software are included.

Wherein, the reference pattern may be any one having a difference identifiable between a pattern and an outside periphery of the pattern, for example, a difference between contrasts, a difference between brightness, a difference between colors, a difference between textures, etc.

The reference pattern, for example, may be configured as shown in FIG. 2. That is, in a photograph stand of which the pedestal 30 incorporates a digital clock therein and which can replace a photograph, a picture, etc., the outer frame of the clock is used as a reference pattern 31. In this case, the numerical figures of this built-in clock are not used for identification. A texture for identification 32 that is an image should be identified may be the photograph and the picture to be replaced at the photograph stand. In such a case, since the position of the texture 32 is physically decided against the reference pattern 31, a prescribed positional relationship storage unit 14 may stores the positional relationship.

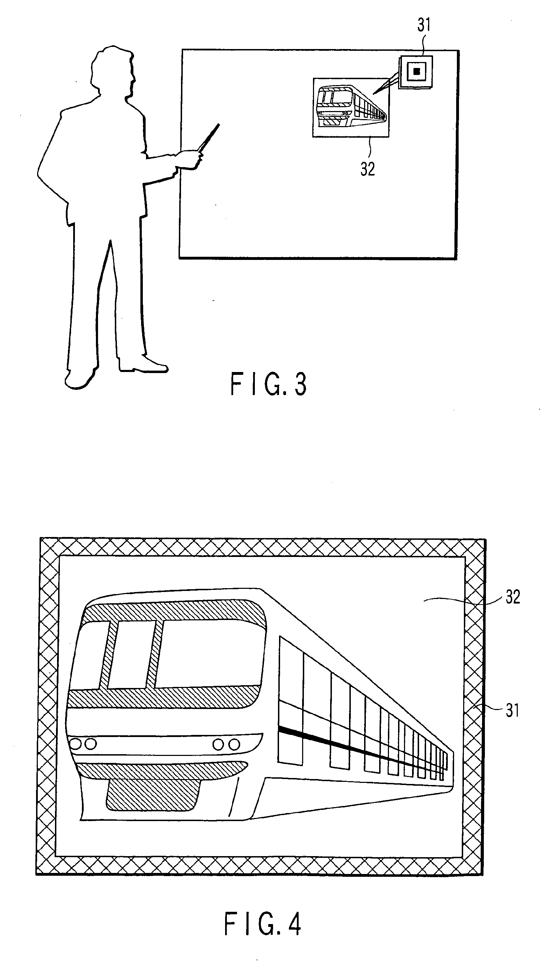

As depicted in FIG. 3, the reference pattern 31 may be configured at a part of a pin to hold the photograph, etc. that is the texture 32 on a board. In this case, since the position of the texture 32 is also physically decided to the reference pattern 31, the positional relationship may be stored in the prescribed positional relationship storage unit 14.

Or, as shown in FIG. 4, a photograph frame capable of storing and replacing the texture 32 that is the image should be identified may be used as the reference pattern 31. Like this, by setting the frame to which the texture 32 that is the photograph etc. can be put in as the reference pattern 31, the frame makes it possible to replace the texture 32.

In FIG. 2 or 4, the texture 32 is not limited to the photograph and the picture; it may be configured to be replaceable, for example, by making it as an image displayed on a liquid crystal display.

Here, an extraction method of a texture area for identification will be described in a breeze.

That is, a reference pattern detection unit 12 checks whether or not the reference pattern 31 (rectangular frame in this example) is present within the image on the basis of an image input from an image input unit 10. In an information terminal, position information (coordinate value in world coordinate system) at four corners of the rectangular frame records in advance together with template information of the corresponding texture. Therefore, detecting the rectangular frame and identifying the texture make it possible to estimate the position and the attitude of the input unit 10 in the world coordinate system.

At first, extracting the rectangular frame within the image makes it possible to obtain the position and the attitude of the input unit 10 in a reference pattern coordinate system. A method of obtaining the position and the attitude of the input unit 10 from the reference pattern 31 is disclosed in "A High Accuracy Realtime 3D Measuring Method of Marker for VR Interface by Monocular Vision" (3D Image Conference '96 Proceeding pp. 167-172, Akira Takahashi, Ikuo Ishii, Hideo Makino, Makoto Nakashizuka, 1996).

Further, the reference pattern 31 that is the rectangular frame and the corresponding texture 32 for identification are placed at a prescribed relational position. Relative position information (reference pattern coordinate value) from the rectangular frame of the texture is recorded in the storage unit 14 in advance.

The texture 32 has, for example, a square shape, the relative position information $(X_0, Y_0, Z_0)$ is an coordinate of a point at a left upper corner of the texture 32 in the case in which the left upper corner point of the reference pattern 31 is set as an original point. If a length "a" of a side is given as size information, relative position information (coordinate value of texture for identification) to the left upper corners of other three corners is obtained. The relative position information becomes (0, 0, 0), (a, 0, 0), (0, a, 0) and (a, a, 0) for the left upper corner, the right upper corner, the left lower corner and the right lower corner, respectively.

Here, the coordinate value of the texture for identification may be converted into a reference pattern coordinate value by the below mentioned expression of Formula 1. In the expression, $(x_{wp}, y_{wp}, z_{wp})$ indicates a relative position (reference pattern coordinate value) from the reference pattern 31 at the left upper corner point, respectively. $(x_{lp}, y_{lp}, z_{lp})$ indicates the coordinate in a coordinate system of texture for identification setting the left upper corner point of the texture as a reference.

[Formula 1]

$$\begin{bmatrix} x_{wp} \\ y_{wp} \\ z_{wp} \\ 1 \end{bmatrix} = L \cdot \begin{bmatrix} x_{lp} \\ y_{lp} \\ z_{lp} \\ 1 \end{bmatrix}$$

Here, L is a determinant of the below given Formula 2, and in the determinant, Rot indicates an attitude in the reference pattern coordinate system of the texture for identification 32, and $(t_x, t_y, t_z)$ indicates a coordinate value of the left upper corner point of the texture in the reference pattern coordinate system.

[Formula 2]

$$L = \begin{bmatrix} & & & t_x \\ & \text{Rot} & & t_y \\ & & & t_z \\ 0 & 0 & 0 & 1 \end{bmatrix} = \begin{bmatrix} r_{11} & r_{12} & r_{13} & t_x \\ r_{21} & r_{22} & r_{23} & t_y \\ r_{31} & r_{32} & r_{33} & t_z \\ 0 & 0 & 0 & 1 \end{bmatrix}$$

The relative position information from the reference pattern 31 at the left upper corner position of the texture for identification 32 is set to $(x_k, y_k, z_k)$, the case, in which XYZ axes of a texture coordinate system are made by moving in parallel the XYZ axes of the reference pattern coordinate system, is described, and a rotational element is ignored, then, absolute value coordinates of the texture 32 in the reference pattern coordinate system are obtained as follows:

$$x_{wp} = w_{wwp} + x_k$$

$$y_{wp} = y_{wwp} + y_k$$

$$z_{wp} = z_{wwp} + z_k$$

Using the coordinates makes it possible to extract the texture area for identification.

In this manner, if the extracting the texture are for identification can be performed, an image identification unit 16 makes it possible to identify that to which marker the texture 32 is belonged by means of usual template matching.

Further, by performing the identification, the coordinate value in the world coordinate system of the reference pattern 31 can be identified, and the coordinate value in the world coordinate of the input unit 10 is decided uniquely. If the input unit 10 is fixedly disposed at the corresponding information terminal, the coordinate value in the world coordinate of the information terminal is decided consequently and uniquely. As given above, the image identification unit 16 includes a position and attitude determining unit 16A which detects the position and the attitude of the information terminal in the reference coordinate system from the image input by the input unit 10.

(Second Embodiment)

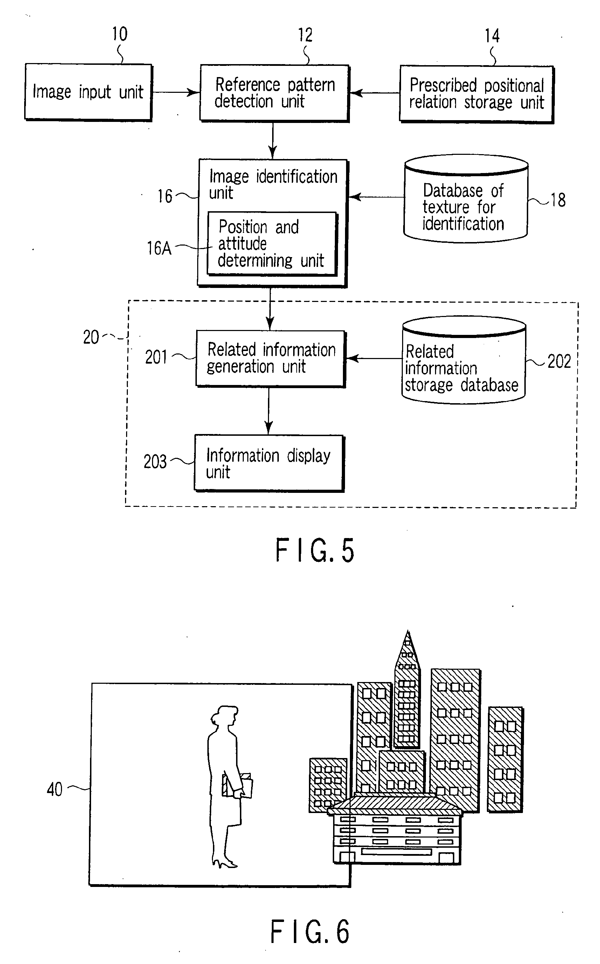

An information terminal regarding this embodiment is, as illustrated in FIG. 5, configured so that the processing unit 20 is composed of a related information generation unit 201, a related information storage database 202 and an information display unit 203.

Here, the related information storage database 202 has registered related information corresponding to a variety of markers. The related information generation unit 201 retrieves the storage database 202 in accordance with the image identified by the image identification unit 16 to generate related information relating to the identified image. The information display unit 203 that is a liquid display, etc., presents the related information generated from the generation unit 201.

In this case, the generation unit 201 may be configured so that not only makes the related information to be presented on the display unit different but also makes the position to present the related information different.

The presentation form of the related information on the display unit 203 may be one to display the related information, and also may be one to superpose and display the related information on the image input by the input unit 10. In the display of the related information, the generation unit 201 corrects the position and the attitude of the generated related information to supply them to the display unit 203 on the basis of the position and the attitude of the corresponding information terminal in the reference coordinate system detected from the image input by the input unit 10 as mentioned for the first embodiment. Thus, the related information may be displayed in a form corresponding to the position and the attitude of the corresponding information terminal. The display of the related information corresponding to the position and the attitude is appropriate to the case to superpose and display the related information especially for the latter display form.

As to the related information, for example, bibliographic information of image input equipment in generating an image as the texture 32 for identification, in other words, in photographing a photograph. That is to say, in image input equipment such as a digital camera can input bibliographic information such as a use equipment type and a photographing condition together with the image. Therefore, storing such bibliographic information in the related information storage database 202 makes it possible to set the bibliographic information corresponding to the image input from the input unit 10 as the related information.

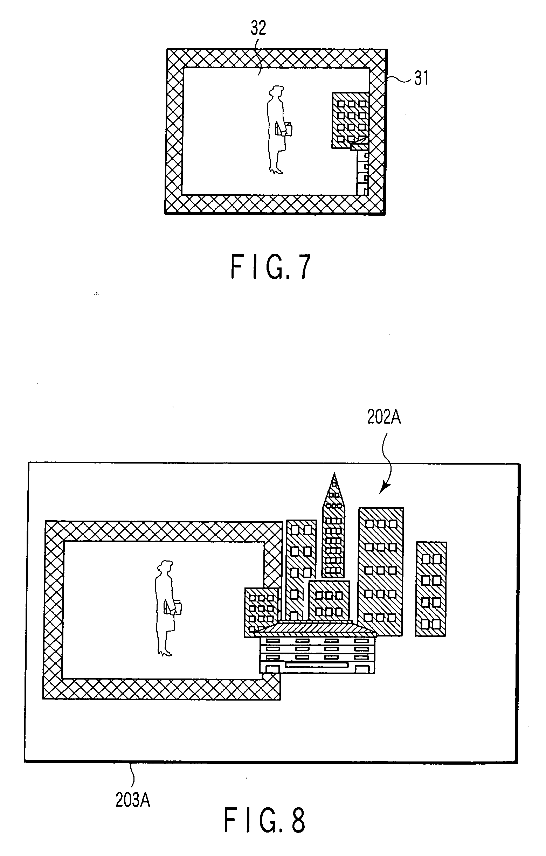

The related information also may be information relating to landscape or a position in or at which an image (picture) as the texture 32 has been photographed. For example, as depicted in FIG. 6, a photographed image 40 including a part of landscape is photographed. As shown in FIG. 7, the image 40 is put into a photograph frame in which a frame shown in FIG. 4 is used as the reference pattern 31 to be set as the texture 32. In this case, if there is a template matching with the part of the landscape in the texture 32 in the database of texture for identification 18, information given below may be presented. That is, in such case, if data of a landmark is stored in the related information storage database 202, the data of the land mark, as shown in FIG. 8, may be superposed and displayed on the input image as related information 202A onto an information display unit screen 203A. In this case, it is of course that a two-dimensional image in a visible direction is generated as the related information 202A by the use of the position and the attitude of the image input unit 10.

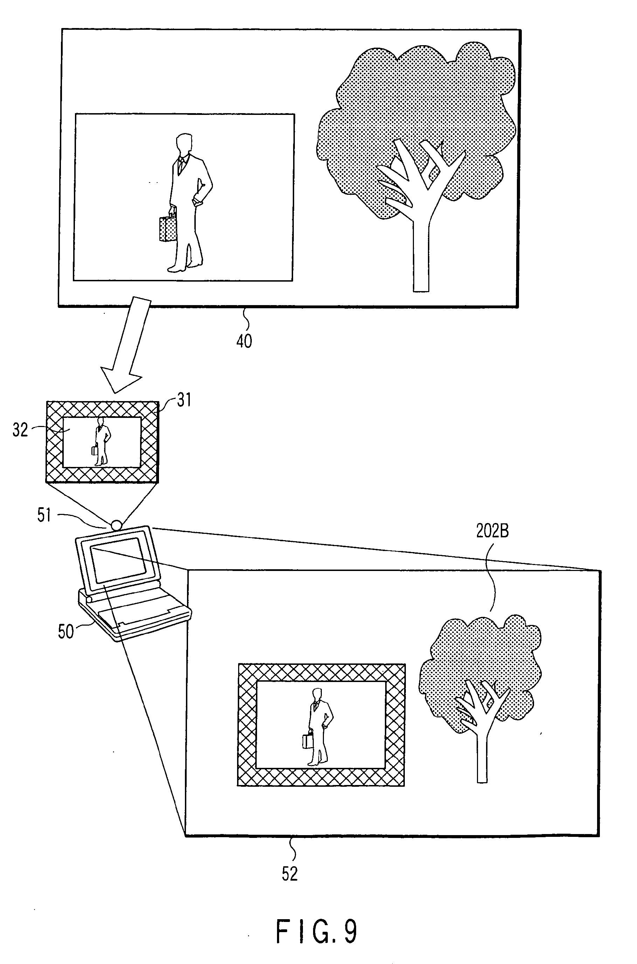

The related information may be a field of view of photographing of image input equipment which has generated an image as the texture 32 or landscape around a field of view of a result of cut-out processing after photographing. For example, as depicted in FIG. 9, a print-out matter of a photograph in which the part of the image 40 is trimmed is put as the texture 32 into a photograph frame in which a frame shown in FIG. 4 is used as the reference pattern 31, and the trimmed photograph is registered in the database 18. The photographed image 40 is registered in the storage database 202. In the case given above makes it possible to display as mentioned below. That is, in such case, photographing the photograph frame by means of an image input apparatus 51 (corresponding to image input unit 10) of the information terminal 50 makes it possible to superpose and display the trimmed part as the related information 202B on the information display unit screen 52 (corresponding to information display unit screen 203A) of the information terminal 50.

The related information is not limited to the photograph related to a visual scene in the image of the texture 32 identified by the image identification unit 16, and it may be any item of information of voice, a moving image, digital content, etc.

While the present invention has been described on the basis of the foregoing embodiments, the invention is not limited to the aforementioned embodiments, it is of course that this invention may be embodied in various forms without departing from the sprit or scope of the general inventive concept thereof.

For example, while the positional relationship between the reference pattern 31 and the texture for identification 32 has been recorded in the prescribed positional relationship storage unit 14, the positional relationship may be read from the detected reference pattern 31 in a manner that, for example, the reference pattern 31 is configured as a code such as one-dimensional or two-dimensional barcode. That is, the positional relationship between the reference pattern 31 and the texture 32 may be provided in any form as long as the positional relationship can be recognized on the basis of the reference pattern 31.

Although the foregoing embodiments have been described as examples in which the reference patterns are geometric patterns such as rectangulars, the design of the reference patterns are not limited to the geometric patterns. Any pattern may be usable as long as a form satisfying a function of the reference pattern to specify the position of the texture for identification. For example, in the case of a not geometric design like a photograph of natural landscape or an illustration of a mascot character, as long as at least three points of the corresponding characteristic points can be identified by matching processing using a characteristic point group, the position and the attitude of the reference pattern and the photographed image may be identified. In the case in which the characteristic point holds information of a face as a tensor, even one point may identify the position and the attitude of the reference pattern and the photographed image. Therefore, identifying the position of the texture for identification can be performed.

The characteristic points in the image described herein are ones that have differences from other pixels larger than a fixed level, the characteristic points include, for example, a contrast between light and dark, a color, a distribution of surrounding pixels, a differential component value and an arrangement among characteristic points. These characteristic points are extracted to register them for each object.

The information terminal, in using, searches within the input image, and extracts the characteristic points to compare them with the already registered data. If a numerical value indicating the degree of analogy (difference in each component of mutual characteristic points) exceeds a preset threshold, it is determined that the characteristic point is analogical characteristic point, and it is determined that an object in which a plurality of characteristic points are further coincide with one another is the same as that of the input image.

**Claims**

1. An information terminal, **characterized by** comprising:

   an image input unit (10; 51) which inputs images;
   a reference pattern detection unit (12) which detects a reference pattern (31) in the images input from the image input unit (10; 51);
   an identification unit (16) which identifies an image in an area in a predetermined positional relationship to the reference pattern (31) detected by the reference pattern detection unit (12) out of the images input from the image input unit (10; 51); and
   a processing unit (20) which performs processing associated with the image identified by the identification means (16).

2. The information terminal according to claim 1, **characterized in that**
   the processing unit (20) performs information display, and
   the processing unit (20) comprises:

a related information generation unit (201) which generates related information relating to the image identified by the identification means (16); and

an information presenting unit (203; 52) which presents the related information generated from the related information generation unit (201).

**3.** The information terminal according to claim 1, **characterized in that** the reference pattern (31) has a difference which can identify between the pattern and outer periphery thereof.

**4.** The information terminal according to claim 1, **characterized in that** the prescribed positional relationship is defined in advance.

**5.** The information terminal according to claim 1, **characterized in that** the prescribed positional relationship can be recognized on the basis of the reference pattern (31).

**6.** **The information terminal according to claim 1, characterized in that** the reference pattern (31) is a frame which can store and replace an image should be identified.

**7.** The information terminal according to claim 2, **characterized in that** information to present on the information presenting unit (203; 52) and/or position at which the information is presented is different in response to a kind of the reference pattern (31) detected by the reference pattern detection unit (12).

**8.** The information terminal according to claim 2, **characterized in that** the related information to be presented on the information presenting unit (203; 52) is bibliographic information of image input equipment by which the image to be identified has been generated.

**9.** The information terminal according to claim 2, **characterized in that** the related information to be presented on the information presenting unit (203; 52) is information relating to a landscape or a position in or at which an image to be identified has been photographed.

**10.** The information terminal according to claim 2, **characterized in that** the related information to be presented on the information presenting unit (203; 52) is a field of view of photographing of image input unit (10; 51) which has generated an image to be identified or landscape around a field of view of a result of cut-out processing after photographing.

**11.** The information terminal according to claim 2, **characterized in that** the related information to be presented on the information presenting unit (203; 52) is at least one of voice, a photograph and digital content relating to a visual scene in the image identified by the identification means (16).

**12.** The information terminal according to any one of claims 2 to 11, **characterized by** further comprising:

a position and attitude determining unit (16A) which detects a position and an attitude of the corresponding information terminal (50) in a reference coordinate system from the images input by the image input unit (10; 51), and **characterized in that**

the related information is presented in the images input by the image input unit (10; 51) on the information presenting unit (203) at the position and in the attitude based on the detection result from the position and attitude determining unit (16A).

FIG. 1

FIG. 2

F I G. 3

F I G. 4

F I G. 5

F I G. 6

F I G. 7

F I G. 8

F I G. 9

**INTERNATIONAL SEARCH REPORT**

| International application No. |
|---|
| PCT/JP2006/305584 |

A. CLASSIFICATION OF SUBJECT MATTER
*G06T11/80*(2006.01), *G06T1/00*(2006.01)

According to International Patent Classification (IPC) or to both national classification and IPC

B. FIELDS SEARCHED

Minimum documentation searched (classification system followed by classification symbols)
*G06T11/80*(2006.01), *G06T1/00*(2006.01)

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2005-182350 A  (Olympus Corp.),<br>07 July, 2005 (07.07.05),<br>Claim 1; Par. Nos. [0008] to [0027]<br>(Family: none) | 1-4,12<br>5,8,9,11<br>6,7,10 |
| Y | JP 2002-90118 A  (Olympus Optical Co., Ltd.),<br>27 March, 2002 (27.03.02),<br>Par. No. [0127]<br>& US 2002/0052709 A1 | 5 |
| A | JP 2001-184508 A  (Toshiba Corp.),<br>06 July, 2001 (06.07.01),<br>Full text; all drawings<br>(Family: none) | 6 |

☒ Further documents are listed in the continuation of Box C.      ☐ See patent family annex.

| * Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
|---|---|

| Date of the actual completion of the international search<br>25 May, 2006 (25.05.06) | Date of mailing of the international search report<br>06 June, 2006 (06.06.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/305584 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2003-103052 A (Canon Inc.), 08 April, 2003 (08.04.03), Full text; all drawings & US 2003/0062675 A1 | 7 |
| Y A | JP 2006-72428 A (Olympus Corp.), 16 March, 2006 (16.03.06), Par. Nos. [0048] to [0060], [0067] (Family: none) | 8,9,11 10 |

Form PCT/ISA/210 (continuation of second sheet) (April 2005)

**INTERNATIONAL SEARCH REPORT**

| International application No. |
| --- |
| PCT/JP2006/305584 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
A special technical feature of inventions of claims 1-5 and 12 is directed to "a prescribed position relation can be recognized based on a standard pattern", that of an invention of claim 6 is directed to "a standard pattern is a frame which can store a video image to be identified and which is replaceable", that of an invention of claim 7 is directed to " information to be presented and/or an information presenting position is different in accordance with a kind of a standard pattern", and that of inventions of claims 8-11 is directed to "related information to be presented is different in accordance with an identified video image".

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6577249 B
- US P6577249 B

- JP 2003067742 A

**Non-patent literature cited in the description**

- **AKIRA TAKAHASHI ; IKUO ISHII ; HIDEO MAKINO ; MAKOTO NAKASHIZUKA.** A High Accuracy Realtime 3D Measuring Method of Marker for VR Interface by Monocular Vision. *3D Image Conference '96 Proceeding,* 1996, 167-172